# EUROPÄISCHE PATENTANMELDUNG

(11) **EP 2 177 589 A1**
(43) Veröffentlichungstag der Anmeldung: **21.04.2010**
(21) Anmeldenummer: 08018155.5
(22) Anmeldetag: 16.10.2008
(51) Int. Cl.: C10J 3/00, C10J 3/84

(54) **Synthesegasaufbereitungsanlage sowie ein Verfahren zum Betrieb einer solchen Anlage**

(71) Anmelder: Siemens Aktiengesellschaft, 80333 München (DE)
(72) Erfinder: Graeber, Carsten, 91056 Erlangen (DE); Zimmermann, Gerhard, Dr., 91315 Höchstadt/Aisch (DE)

(57) **Zusammenfassung**

Die Erfindung betrifft eine Synthesegasaufbereitungsanlage (1) umfassend eine CO₂-Abtrenneinrichtung zur Abtrennung von CO₂ aus einem Synthesegas, dadurch gekennzeichnet, dass in Strömungsrichtung des Synthesegases vor die CO₂-Abtrenneinrichtung (4) ein Verdichter (8) geschaltet ist. Die Erfindung betrifft ferner ein Verfahren zum Betrieb einer solchen Anlage.

## Beschreibung

Die Erfindung betrifft eine Synthesegasaufbereitungsanlage und bezieht sich auf die Prozessverbesserung der CO₂-Abtrennung. Die Erfindung betrifft ferner ein Verfahren zum Betrieb einer Synthesegasaufbereitungsanlage, wobei die Betrachtungen nicht nur, aber vor allem beim Flugstromvergaser mit Wasservollquench relevant sind.

Gas- und Dampfkraftwerke weisen eine Gasturbine und eine Dampfturbine auf. Die Gasturbine wird beispielsweise mit einem fossilen Brennstoff befeuert, wobei bei dessen Verbrennung Abwärme erzeugt wird. Die Abwärme wird in einem Dampferzeuger zur Erzeugung von Frischdampf benutzt, mit dem die Dampfturbine angetrieben wird.

Die Gasturbine kann beispielsweise mit Erdgas betrieben werden, dem Gas- und Dampf-Kombikraftwerk kann aber auch eine Brennstoffvergasung vorgeschaltet sein (IGCC= integrated gasification combined cycle), in der Primärenergie in Form von z. B. Kohle, Biomasse oder Abfall in einer Vergasungsanlage unterstöchiometrisch zu energiereichem Synthesegas, das ungereinigt auch als Rohgas bezeichnet wird, vergast wird.

Am Austritt der Brennstoffvergasungsanlage weist das Rohgas insbesondere eine hohe Konzentration an Wasserstoff und Kohlenmonoxid sowie Verunreinigungen durch Schwefelverbindungen, Schwermetalle und Staub auf. Zur Beseitigung der Schwefelverbindungen, der Schwermetalle und des Staubes aus dem Rohgas ist eine Synthesegasaufbereitungsanlage vorgesehen.

Im Falle des IGCC mit CO₂-Abtrennung umfasst der Weg des Rohgases in der Synthesegasaufbereitungsanlage die Rohgaskühlung - je nach Konzept durch Abhitzenutzung zur Dampferzeugung oder Wasserquench - Trockenentstaubung und/oder Venturi-Wäsche (Entfernung von Alkalien, Halogeniden, etc.), CO-Konvertierung (oder CO-Shift) und CO₂-Abtrennung, sowie die Entschwefelung. Ist die CO-Konvertierung der Entschwefelung vorgeschaltet spricht man auch von einer Rohgas-Shift. Die CO-Konvertierung kann anwendungsabhängig auch der Entschwefelung nachgeschaltet sein, man spricht dann von einer Reingas-Shift.

Vor dem Eintritt des Rohgases in die Synthesegasaufbereitungsanlage ist das Rohgas in einer Rohgasvorkühlungseinrichtung zu kühlen. Bei einem Vergasungsverfahren mit einem Wasserquench als Rohgasvorkühlungseinrichtung wird hierbei in das heiße Rohgas Wasser eingesprüht, das verdampft und dadurch das Rohgas kühlt (Quench). Nach der ersten Stufe der Rohgasreinigungsanlage wird das Rohgas beispielsweise einem Prozessschritt zur Umwandlung des im Rohgas enthaltenen Kohlenmonoxids zugeführt. In diesem Prozessschritt wird auf Grundlage der Wassergas-Shift-Reaktion (CO + H₂O -> CO₂ + H₂) der hohe Anteil des Kohlenmonoxids im Rohgas mit Wasserdampf in Kohlendioxid und Wasserstoff umgewandelt. Da es sich hierbei um eine Gleichgewichtsreaktion handelt, erfolgt dieser Prozessschritt beispielsweise katalytisch in einem oder mehreren Shift-Reaktoren.

Für die nachgeschaltete Entschwefelung/CO₂-Abtrennung in chemischen/physikalischen Wäschen wird das konvertierte Gas auf geringe Temperaturen gekühlt und dabei Wärme für Dampferzeugung und/oder andere Zwecke zurückgewonnen beziehungsweise über Kühlwasser abgeführt. Das im konvertierten Gas enthaltene Wasser wird dabei zum Großteil auskondensiert.

Die physikalische Wäsche beruht auf der unterschiedlichen Löslichkeit einzelner Gaskomponenten z.B. in einem organischen Waschmittel. Die Abscheidung von Schwefelwasserstoff (H₂S) und Kohlendioxid (CO₂) kann sowohl gemeinsam als auch selektiv erfolgen.

Bei chemischen Wäschen erfolgt die Auswaschung von CO₂ und/oder H₂S durch chemische Reaktion mit dem Waschmittel. Die Regeneration des Waschmittels wird in der Regel durch Wärmezufuhr in Verbindung mit einer Entspannung durchgeführt. Aufgrund unterschiedlicher Reaktionsgeschwindigkeiten für H₂S und CO₂ ist, abhängig von den Konzentrationen, bei einem Teil der Waschmittel eine selektive H₂S-Abscheidung möglich.

Das Gas- und Dampfkraftwerk hat somit stark reduzierte Kohlendioxidemissionen, so dass das Gas- und Dampfkraftwerk umweltschonend ist.

Das Druckniveau dieser Prozesskette wird in heutigen Konzepten durch den Druck der Vergasung bestimmt. Dieser liegt beispielsweise beim SFG (Siemens Fuel Gasification Technology, trockener Brennstoffeintrag) derzeit bei etwas über 40 bar.

In den derzeitigen Konzepten bestimmt sich das Druckniveau im Bereich CO-Konvertierung, Kühlung des konvertierten Gases und Entschwefelung/CO₂-Abtrennung durch den Vergaserdruck und die Druckverluste in der Verfahrenskette bis zur CO-Konvertierung (bestimmt im wesentlichen durch die Venturi-Wäschen). Liegt der Druckverlust über den gesamten Gasweg höher als das Potenzial wie es aus den Randbedingungen Vergaser- und Gasturbinenbrennkammerdruck resultiert, so wird ein Synthesegasverdichter notwendig. Nach einem derzeitigen Konzept wird dieser der Entschwefelung/CO₂-Abtrennung nachgeschaltet.

Aufgabe der Erfindung ist die Angabe einer verbesserten Synthesegasaufbereitungsanlage sowie eines verbesserten Verfahrens zur Aufbereitung von Synthesegas.

Erfindungsgemäß wird die auf eine Synthesegasaufbereitungsanlage gerichtete Aufgabe gelöst durch eine Synthesegasaufbereitungsanlage, umfassend eine CO₂-Abtrenneinrichtung zur Abtrennung von CO₂ aus einem Synthesegas, wobei in Strömungsrichtung des Synthesegases vor die CO₂-Abtrenneinrichtung ein Verdichter geschaltet ist.

Die Erfindung beruht demnach auf dem Gedanken, dass ein erhöhtes Druckniveau zu weiter abnehmenden Volumenströmen und damit geringeren Apparatedimensionen führen würde. Dies beträfe die Komponenten in der CO-Konvertierung, die Kühlung des konvertierten Gases (z. B. Wärmetauscher) und die Gaswäsche.

Ferner könnte ein erhöhtes Druckniveau die Effektivität der (physikalischen) Wäschen (Entschwefelung, CO₂-Abtrennung) steigern. An der Grenzfläche zwischen Gasen und Flüssigkeiten kommt es nämlich durch Diffusion zum Austausch von Gasmolekülen zwischen der Lösung und dem Gasraum. Der Eintritt von Molekülen in die Lösung ist dabei proportional dem Partialdruck des Gases, also dem Druck, der in einem Gasgemisch einem bestimmten Gas zugeordnet werden kann, und der Austritt aus der Lösung ist proportional der Konzentration des Gases in der Lösung.

Da das Synthesegas einen hohen Anteil an Wasserdampf aufweist, in dem Wärme latent gebunden ist, würde sich schließlich aufgrund der mit zunehmendem Gesamtdruck erhöhten Wasserkondensationstemperatur die nutzbare Wärme bei der Abkühlung erhöhen, wodurch die Endkühlung durch Kühlwasser entfällt oder zumindest geringer wird.

Insgesamt ist demnach ein weiter erhöhtes Druckniveau in der beschriebenen Gasbehandlung anzustreben. Die derzeitige Grenze beruht im Wesentlichen auf Vorgaben und Grenzen aus der Vergasungstechnik (trockenes Eintragsystem, Schlackeausschleusung, etc.).

Vorteilhafterweise ist eine Abkühlstrecke zur Abkühlung des Synthesegases zwischen den Verdichter und die CO₂-Abtrenneinrichtung geschaltet. Dadurch wird das konvertierte Gas auf geringe Temperaturen gekühlt und Wärme kann für Dampferzeugung und/oder andere Zwecke zurück gewonnen werden bzw. muss über Kühlwasser abgeführt werden.

Zweckmäßigerweise umfasst die Abkühlstrecke hierzu mindestens einen Wärmetauscher, insbesondere einen Synthesegas/Dampf-Wärmetauscher.

In einer vorteilhaften Ausgestaltung der Erfindung ist der Verdichter in Strömungsrichtung des Synthesegases einer Venturi-Wäsche nachgeschaltet, da einerseits die Druckverluste in der Verfahrenskette bis zur CO-Konversion im Wesentlichen durch die Venturi-Wäschen bestimmt sind und andererseits bereits eine Vorreinigung des Rohgases erfolgt ist, wodurch die Häufigkeit von Wartungsarbeiten zur Reinigung von Verdichterkomponenten erheblich reduziert und die Erosion und Korrosion im Verdichter vermindert werden.

Weiterhin vorteilhaft ist es, wenn der Verdichter in Strömungsrichtung des Synthesegases vor einen Wassergas-Shift-Reaktor geschaltet ist. Somit kann bereits bei der CO-Konversion der erhöhte Synthesegasdruck genutzt werden, um eine bessere Umsetzung der Ausgangsstoffe CO und H₂O in die Endstoffe CO₂ + H₂ zu erzielen.

Liegt unter Berücksichtigung einer noch zu erfolgenden Konditionierung und Regelung der Druck des Synthesegases über dem für die Gasturbine technisch erforderlichen Niveau, so ist es zweckmäßig, wenn in Strömungsrichtung des Synthesegases hinter die CO₂-Abtrenneinrichtung eine Entspannungsturbine geschaltet ist, die wiederum zweckmäßigerweise mit einem Generator verbunden ist, so dass der Überschuss zur Erzeugung elektrischer Energie genutzt wird. Alternativ kann die Entspannungsturbine auch für einen mechanischen Antrieb genutzt werden.

Im erfinderischen Verfahren zum Betrieb einer Synthesegasaufbereitungsanlage umfassend eine CO₂-Abtrenneinrichtung zur Abtrennung von CO₂ aus einem Synthesegas wird das Synthesegas verdichtet, bevor es der CO₂-Abtrenneinrichtung zugeführt wird.

Vorteilhafterweise wird das Synthesegas stärker verdichtet, als es für einen Gasturbinenbrennkammerdruck technisch erforderlich wäre.

Ferner ist es vorteilhaft, wenn das Synthesegas in Strömungsrichtung des Synthesegases hinter der CO₂-Abtrenneinrichtung entspannt wird, so dass am Ende der Synthesegasstrecke und unter Berücksichtigung von Konditionierung und Regelung des Synthesegases der Druck desselben im Bereich des notwendigen Gasturbinenbrennkammerdrucks liegt.

Vorteilhafterweise wird das Synthesegas aus Gründen der Verdichtungseffizienz und im Hinblick auf die Lebensdauer der Verdichterkomponenten vor dem Verdichten in einer Venturi-Wäsche gereinigt.

Vorteilhafterweise wird das Synthesegas verdichtet, bevor in einer Wassergas-Shift-Reaktion sein CO-Anteil verringert und sein H₂-Anteil erhöht wird, da durch eine Verdichtung die Umsetzungseffizienz gesteigert wird.

Die Erfindung wird beispielhaft anhand der Zeichnungen näher erläutert. Es zeigen schematisch und nicht maßstäblich:
- Figur 1: eine Synthesegasaufbereitung nach dem Stand der Technik,
- Figur 2: eine Synthesegasaufbereitung nach der Erfindung und
- Figur 3: eine alternative Synthesegasaufbereitung nach der Erfindung.

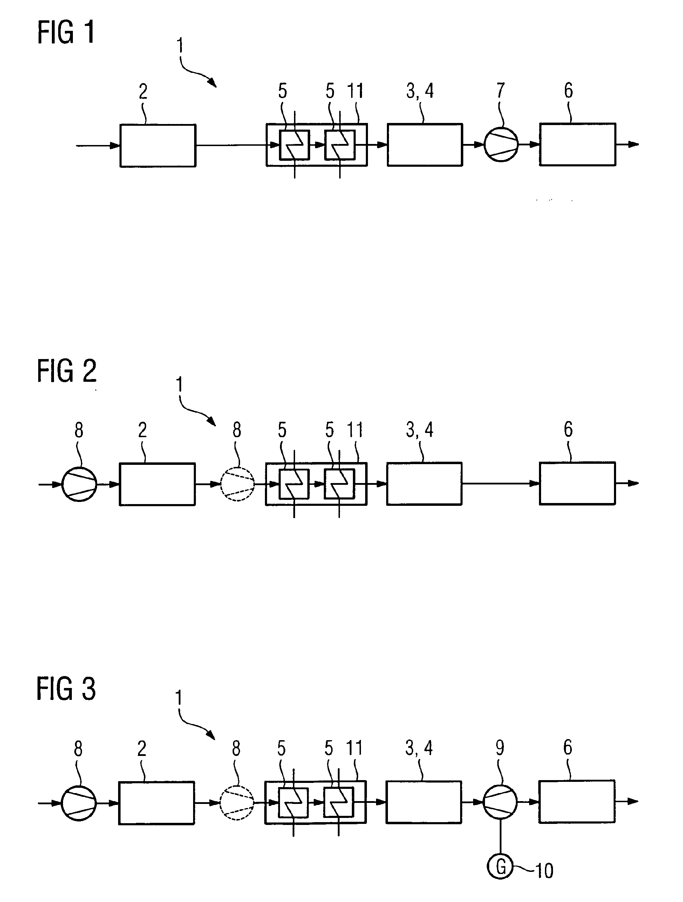

Die Figur 1 zeigt schematisch und beispielhaft eine Synthesegasaufbereitungsanlage 1 gemäß dem Stand der Technik. Nach der Synthesegaserzeugung durch beispielsweise Kohlevergasung, bei der Kohle in einer Mischung aus partieller Oxidation und Vergasung mit Wasserdampf zu einem Gemisch aus Kohlenmonoxid und Wasserstoff umgesetzt wird, durchläuft das Synthesegas eine Rohgaskühlung, eine Trockenentstaubung und/oder eine Venturi-Wäsche zur finalen Entstaubung und Entfernung von Alkalien, Halogeniden und anderen Stoffen, bevor in einem Wassergas-Shift-Reaktor 2 der Kohlenmonoxid(CO)-Anteil des Synthesegases verringert und der Wasserstoff(H)-Anteil erhöht wird. Die Wassergas-Shift-Reaktion läuft exotherm ab. Da aber für die nachgeschaltete Entschwefelung 3 und CO₂-Abtrennung 4 in chemischen/physikalischen Wäschen das konvertierte Gas auf einer Abkühlstrecke 11 gekühlt werden muss, kann die gewonnene Wärme für Dampferzeugung und/oder andere Zwecke genutzt, beziehungsweise muss über Kühlwasser abgeführt werden. Zu diesem Zweck sind in Figur 1 beispielhaft zwei Wärmetauscher 5 gezeigt, von denen einer als Synthesegas/Dampf-Wärmetauscher ausgeführt sein kann und der andere einen Wärmetauscher darstellt, in dem lediglich Wasser erwärmt wird.

Anders als in Figur 1 gezeigt, kann die CO-Konvertierung im Wassergas-Shift-Reaktor 2 anwendungsabhängig auch der Entschwefelung 3 nachgeschaltet sein bzw. die Entschwefelung vor die CO-Konvertierung gezogen werden (Reingas-Shift).

Am Ende des Reinigungs- und Konversions-Prozesses liegt Reingas vor, das im wesentlichen Wasserstoff enthält. Dieses Reingas wird in einer Reingaskonditionierung 6 zum Beispiel mit Stickstoff gemischt und mit Wasserdampf aufgesättigt. Das konditionierte Reingas wird üblicherweise erwärmt und als Brenngas einem Brenner im GuD-Prozess zur Verbrennung zugeführt.

Das Druckniveau dieser Prozesskette wird in heutigen Konzepten durch den Druck der Vergasung bestimmt. Dieser liegt beispielsweise beim SFG (Siemens Fuel Gasification Technology, trockener Brennstoffeintrag) derzeit bei etwas über 40 bar. Liegt der Druck des Synthesegases über dem für die Gasturbine technisch erforderlichen Niveau, z.B. infolge eines potentiell höheren Vergasungsdrucks, wird eine Entspannungsturbine beispielsweise unmittelbar vor die Reingaskonditionierung 6 geschaltet. Liegt der Druck jedoch unter dem für die Gasturbine technisch erforderlichen Niveau, z.B. infolge der Druckverluste in den vorausgegangenen Prozessschritten, ist ein Verdichter 7 notwendig, der üblicherweise in Strömungsrichtung des Synthesegases nach der Rohgasreinigung angeordnet ist.

Es wird vorgeschlagen, das Druckniveau bereits für die Strecke vom Wassergas-Shift-Reaktor 2 bis einschließlich der Entschwefelung 3 / CO₂-Abtrennung 4 durch Verdichten des Rohgases generell signifikant anzuheben, das heißt, Synthesegas vor, innerhalb oder unmittelbar nach der CO-Konvertierung im Wassergas-Shift-Reaktor 2 zu verdichten. Die Verdichtung im Verdichter 7 hinter Entschwefelung 3 bzw. CO₂-Abtrenneinrichtung 4 entfällt damit.

Figur 2 zeigt eine Synthesegasaufbereitungsanlage 1 nach der Erfindung. Die wesentlichen Komponenten sind dieselben, wie in der in Figur 1 gezeigten Synthesegasaufbereitungsanlage 1 nach dem Stand der Technik. Der optionale Verdichter 7 aus Figur 1, der nur für den Fall, dass das Synthesegas nicht den notwendigen Brennkammerdruck aufweist, zum Einsatz kommt, wird ersetzt durch den in Strömungsrichtung des Synthesegases vor die CO₂-Abtrenneinrichtung 4 geschalteten Verdichter 8 zur Erhöhung des Synthesegasdrucks. In einer bevorzugten Ausführungsform ist der Verdichter in Strömungsrichtung eines Synthesegases vor den Wassergas-Shift-Reaktor 2 geschaltet, um bereits bei der CO-Konversion die Vorteile eines erhöhten Drucks nutzen zu können. Alternativ kann der Verdichter 8 aber auch in Strömungsrichtung eines Synthesegases hinter den Wassergas-Shift-Reaktor 2 geschaltet sein. Durch den Verdichter 8 erfolgen die Prozessschritte der Abwärmenutzung durch die Wärmetauscher 5, der Entschwefelung 3 und der CO₂-Abtrennung 4 unter erhöhtem Druck mit den erwähnten Vorteilen der geringeren Apparatedimensionen, der gesteigerten Effektivität der Wäschen (Entschwefelung 3, CO₂-Abtrennung 4) und der verbesserten Nutzung der Wärme bei der Abkühlung. Die Verdichtung 7 hinter der Entschwefelung 3 entfällt damit.

Erfolgt durch den Verdichter 8 eine Drucksteigerung, die höher liegt, als für den Gasturbinenbetrieb erforderlich, so kann der Überschuss nach Durchlaufen der Prozessschritte der Abwärmenutzung durch die Wärmetauscher 5, der Entschwefelung 3 und der CO₂-Abtrennung 4 in einer Entspannungsturbine 9, wie in Figur 3 gezeigt, wieder zurück gewonnen werden, z.B. indem zur Erzeugung elektrischer Energie ein Generator 10 angetrieben wird.

## Patentansprüche

1. Eine Synthesegasaufbereitungsanlage (1) umfassend eine CO₂-Abtrenneinrichtung (4) zur Abtrennung von CO₂ aus einem Synthesegas, **dadurch gekennzeichnet, dass** in Strömungsrichtung des Synthesegases vor die CO₂-Abtrenneinrichtung (4) ein Verdichter (8) geschaltet ist.

2. Die Synthesegasaufbereitungsanlage (1) nach Anspruch 1,
wobei eine Abkühlstrecke (11) zur Abkühlung des Synthesegases zwischen den Verdichter (8) und die CO₂-Abtrenneinrichtung (4) geschaltet ist.

3. Die Synthesegasaufbereitungsanlage (1) nach Anspruch 2,
wobei die Abkühlstrecke (11) mindestens einen Wärmetauscher (5) umfasst.

4. Die Synthesegasaufbereitungsanlage (1) nach Anspruch 3,
wobei der mindestens eine Wärmetauscher (5) ein Synthesegas/Dampf-Wärmetauscher ist.

5. Die Synthesegasaufbereitungsanlage (1) nach einem der vorhergehenden Ansprüche, wobei der Verdichter (8) in Strömungsrichtung des Synthesegases einer Venturi-Wäsche nachgeschaltet ist.

6. Die Synthesegasaufbereitungsanlage (1) nach einem der vorhergehenden Ansprüche, wobei der Verdichter (8) in Strömungsrichtung des Synthesegases vor einen Wassergas-Shift-Reaktor (2) geschaltet ist.

7. Die Synthesegasaufbereitungsanlage (1) nach einem der vorhergehenden Ansprüche, wobei in Strömungsrichtung des Synthesegases hinter die CO₂-Abtrenneinrichtung (4) eine Entspannungsturbine (9) geschaltet ist.

8. Die Synthesegasaufbereitungsanlage (1) nach Anspruch 7,
wobei die Entspannungsturbine (9) mit einem Generator (10) verbunden ist.

9. Die Synthesegasaufbereitungsanlage (1) nach Anspruch 7,
wobei die Entspannungsturbine (9) mit einem mechanischen Antrieb verbunden ist.

10. Ein Verfahren zum Betrieb einer Synthesegasaufbereitungsanlage (1) umfassend eine CO₂-Abtrenneinrichtung (4) zur Abtrennung von CO₂ aus einem Synthesegas, **dadurch gekennzeichnet, dass** das Synthesegas verdichtet wird, bevor es der CO₂-Abtrenneinrichtung (4) zugeführt wird.

11. Das Verfahren nach Anspruch 10, wobei das Synthesegas stärker verdichtet wird, als es für einen Gasturbinenbrennkammerdruck technisch erforderlich wäre.

12. Das Verfahren nach Anspruch 10 oder 11, wobei das Synthesegas in Strömungsrichtung des Synthesegases hinter der CO₂-Abtrenneinrichtung (4) entspannt wird, so dass der Druck des Synthesegases im Bereich des notwendigen Gasturbinenbrennkammerdrucks liegt.

13. Das Verfahren nach einem der Ansprüche 10 bis 12, wobei das Synthesegas vor dem Verdichten in einer Venturi-Wäsche gereinigt wird.

14. Das Verfahren nach einem der Ansprüche 10 bis 13, wobei das Synthesegas verdichtet wird, bevor in einer Wassergas-Shift-Reaktion sein CO-Anteil verringert und sein H₂-Anteil erhöht wird.
